# EUROPÄISCHE PATENTSCHRIFT

(11) **EP 3 289 623 B1**
(45) Veröffentlichungstag und Bekanntmachung des Hinweises auf die Patenterteilung: **27.02.2019**
(21) Anmeldenummer: 16712307.4
(22) Anmeldetag: 22.03.2016
(51) Int. Cl.: H01M 2/10, H01M 10/625, H01M 10/6556, H01M 10/6568, H01M 10/04

(54) **BATTERIEMODUL UND HOCHVOLTSPEICHER**
BATTERY MODULE AND HIGH VOLTAGE ENERGY STORAGE DEVICE
MODULE DE BATTERIES ET DISPOSITIF DE STOCKAGE D'ENERGIE À HAUTE TENSION

(30) Priorität: 27.04.2015 DE 102015207666
(43) Veröffentlichungstag der Anmeldung: 07.03.2018
(73) Patentinhaber: Bayerische Motoren Werke Aktiengesellschaft, 80809 München (DE)
(72) Erfinder: LANDERER, Florian, 85567 Grafing (DE); BURKART, Fabian, 80796 München (DE); SIERING, Sebastian, 80333 München (DE)
(86) Internationale Anmeldenummer: PCT/EP2016/056266
(87) Internationale Veröffentlichungsnummer: WO 2016/173780

(56) Entgegenhaltungen:
- DE-A1-102009 018 787
- DE-A1-102011 084 660
- DE-A1-102012 219 301
- US-A1- 2012 156 543

## Beschreibung

Die Erfindung betrifft ein Batteriemodul für einen Hochvoltspeicher, insbesondere eines elektrisch antreibbaren Kraftfahrzeugs, aufweisend wenigstens eine elektrische Speicherzelle, wenigstens zwei plattenartig ausgebildete, stirnseitig angeordnete Rahmenbauteile, zwischen denen die elektrische Speicherzelle angeordnet ist, wenigstens einen plattenartig ausgebildeten Kühlkörper mit zumindest einem Kühlkanalsystem, der thermisch leitend mit den elektrischen Speicherzellen verbunden ist, wenigstens einen Fluidzulauf, der über zumindest eine erste Fluidverbindung kommunizierend mit dem Kühlkanalsystem verbundenen ist, und wenigstens einen Fluidablauf, der über zumindest eine zweite Fluidverbindung kommunizierend mit dem Kühlkanalsystem verbundenen ist, wobei der Fluidzulauf und der Fluidablauf kühlkörperabseitig benachbart zu jeweils einem der plattenartig ausgebildeten Rahmenbauteile angeordnet sind, und wobei wenigstens eine der Fluidverbindungen zumindest eine erste Anschlusseinheit, die kühlkörperabseitig benachbart zu dem jeweiligen plattenartig ausgebildeten Rahmenbauteil angeordnet ist und den Fluidzulauf oder den Fluidablauf ausbildet, und zumindest eine kommunizierend mit der ersten Anschlusseinheit verbundene Fluidleitung aufweist.

Des Weiteren betrifft die Erfindung einen Hochvoltspeicher, insbesondere für ein elektrisch antreibbares Kraftfahrzeug.

In elektrisch antreibbaren Kraftfahrzeugen, insbesondere Elektrofahrzeugen, Hybridfahrzeugen und Plug-In-Hybridfahrzeugen, werden Hochvoltspeicher mit einer Vielzahl von elektrisch miteinander verschalteten, elektrischen Speicherzellen in Form von Sekundärbatteriezellen eingesetzt, um elektrische Antriebseinrichtungen der Kraftfahrzeuge mit elektrischer Energie zu versorgen. Ein solcher Hochvoltspeicher kann mehrere elektrisch miteinander verschaltete Untereinheiten, sogenannte Batteriemodule, aufweisen, die jeweils mehrere elektrisch miteinander verschaltete elektrische Speicherzellen umfassen. Die elektrischen Speicherzellen eines derartigen Batteriemoduls können zu einem Zellstapel zusammengefasst sein, der üblicherweise im Fertigungsprozess verpresst, durch einen umlaufenden Modulrahmen verspannt und in Form gehalten wird. Der Modulrahmen kann zusätzlich zur Befestigung des Batteriemoduls an einem Gehäuse des Hochvoltspeichers dienen, wozu er üblicherweise mit einer Vorrichtung, beispielsweise einem Modulhalter, versehen ist, über die das Batteriezellenmodul am Gehäuse befestigt werden kann.

Batteriemodule werden in der Regel mit einer Kühlanordnung versehen, um eine maximal zulässige Betriebstemperatur der elektrischen Speicherzellen im Betrieb des Hochvoltspeichers nicht zu überschreiten. Eine solche Kühlanordnung umfasst üblicherweise eine Kühlplatte mit einem darin angeordneten Kühlkanalsystem, durch das zur aktiven Kühlung der elektrischen Speicherzellen ein gasförmiges, flüssiges oder mehrphasiges Kühlmedium geführt werden kann.

Bei aktuellen Kühlanordnungen ist die Kühlplatte stoffschlüssig mit den elektrischen Speicherzellen eines Batteriemoduls verbunden, wodurch diese Komponenten eines Batteriemoduls zu einer Einheit verschmelzen. Dadurch bildet ein solches Batteriemodul die kleinste austauschbare Energiespeichereinheit eines Hochvoltspeichers. Durch diese modulare Bauweise eines Hochvoltspeichers sind mindestens ein Zufluss und ein Rückfluss des Kühlmediums je Batteriemodul erforderlich. Zudem sind durch die modulare Bauweise für jedes Batteriemodul wenigstens eine Trennstelle am Zufluss und wenigstens eine Trennstelle am Rückfluss des Kühlmediums erforderlich. Da häufig der Bauraum in den horizontalen X- und Y-Richtungen weniger kritisch ist als in vertikaler Z-Richtung, werden die Trennstellen bzw. die Trennstellen ausbildende Fluidkupplungsflansche üblicherweise so an einem Batteriemodul positioniert, dass sich ihre Anordnung in X- und Y-Richtung erstreckt.

DE 10 2011 084 660 A1 offenbart ein Batteriemodul für einen Hochvoltspeicher eines elektrisch antreibbaren Kraftfahrzeugs. Das Batteriemodul umfasst mehrere elektrische Speicherzellen, zwei plattenartig ausgebildete, stirnseitig angeordnete Elemente, zwischen denen die elektrische Speicherzellen angeordnet sind, einen plattenartig ausgebildeten Kühlkörper mit zumindest einem innenliegenden Kühlkanalsystem, der thermisch leitend mit den elektrischen Speicherzellen verbunden ist, einen Fluidzulauf, der über zumindest eine erste Fluidverbindung kommunizierend mit dem Kühlkanalsystem verbundenen ist, und wenigstens einen Fluidablauf, der über zumindest eine zweite Fluidverbindung kommunizierend mit dem Kühlkanalsystem verbunden ist. Der Fluidzulauf und der Fluidablauf sind kühlkörperabseitig benachbart zu einem der plattenartig ausgebildeten Elemente angeordnet. Jede Fluidverbindung umfasst eine separate Anschlusseinheit, die kühlkörperabseitig benachbart zu dem jeweiligen plattenartig ausgebildeten Element angeordnet ist und den Fluidzulauf oder den Fluidablauf ausbildet. Des Weiteren umfasst jede Fluidverbindung zumindest eine die Anschlusseinheit kommunizierend mit dem Kühlkanalsystem verbindende Fluidleitung. Jede Fluidleitung ist hierzu mit einem Ende stoffschlüssig, beispielsweise über eine Lötverbindung, mit einer Großseite des plattenartig ausgebildeten Kühlkörpers verbunden.

Aufgabe der Erfindung ist es, den mit einer Montage eines Batteriemoduls bzw. eines mit Batteriemodulen ausgestatteten Hochvoltspeichers verbundenen Montageaufwand zu verringern.

Diese Aufgabe wird durch die unabhängigen Ansprüche gelöst. Vorteilhafte Ausgestaltungen sind insbesondere in den abhängigen Ansprüchen angegeben, die jeweils für sich genommen oder in unterschiedlicher Kombination miteinander einen Aspekt der Erfindung darstellen können.

Das erfindungsgemäße Batteriemodul für einen Hochvoltspeicher, insbesondere eines elektrisch antreibbaren Kraftfahrzeugs, umfasst wenigstens eine elektrische Speicherzelle, wenigstens zwei plattenartig ausgebildete, stirnseitig angeordnete Rahmenbauteile, zwischen denen die elektrische Speicherzelle angeordnet ist, wenigstens einen plattenartig ausgebildeten Kühlkörper mit zumindest einem Kühlkanalsystem, der thermisch leitend mit den elektrischen Speicherzellen verbunden ist, wenigstens einen Fluidzulauf, der über zumindest eine erste Fluidverbindung kommunizierend mit dem Kühlkanalsystem verbundenen ist, und wenigstens einen Fluidablauf, der über zumindest eine zweite Fluidverbindung kommunizierend mit dem Kühlkanalsystem verbundenen ist, wobei der Fluidzulauf und der Fluidablauf kühlkörperabseitig benachbart zu jeweils einem der plattenartig ausgebildeten Rahmenbauteile angeordnet sind, und wobei wenigstens eine der Fluidverbindungen zumindest eine erste Anschlusseinheit, die kühlkörperabseitig benachbart zu dem jeweiligen plattenartig ausgebildeten Rahmenbauteil angeordnet ist und den Fluidzulauf oder den Fluidablauf ausbildet, und zumindest eine kommunizierend mit der ersten Anschlusseinheit verbundene Fluidleitung aufweist. Des Weiteren umfasst das erfindungsgemäße Batteriemodul wenigstens eine Spanneinrichtung, wobei die die erste Anschlusseinheit umfassende Fluidverbindung zumindest eine zweite Anschlusseinheit aufweist, die kühlkörperseitig benachbart zu dem jeweiligen plattenartig ausgebildeten Rahmenbauteil angeordnet und kommunizierend mit dem Kühlkanalsystem sowie stirnseitig mit dem Kühlkörper verbunden ist, wobei die beiden Anschlusseinheiten mittels der Spanneinrichtung gegeneinander verspannbar sind, und wobei die Fluidleitung über wenigstens eine Dichtung mit wenigstens einer der beiden Anschlusseinheiten verbunden ist.

Erfindungsgemäß werden die beiden Anschlusseinheiten der Fluidverbindung mit der Spanneinrichtung, die beispielsweise eine Spannschraube und eine Gewindebohrung aufweisen kann, gegeneinander verspannt, wodurch die Fluidleitung zur Ausbildung der Fluidverbindung zwischen den Anschlusseinheiten fixiert wird. Die Fluidverbindung weist zwischen der Fluidleitung und der wenigstens einen mit der Fluidleitung über die Dichtung, beispielsweise eine Axialdichtung oder eine Radialdichtung, verbindbaren Anschlusseinheit eine Trennstelle auf, die durch das Verspannen der Anschlusseinheiten, beispielsweise über einen Formschluss zwischen der Fluidleitung und der Anschlusseinheit, unter Ausbildung der Dichtung abgedichtet wird. Es ist nicht erforderlich, die Fluidleitung stoffschlüssig mit der Anschlusseinheit zu verbinden.

Eine Dichtung umfasst zwei möglichst steif ausgebildete Komponenten, die bei dem erfindungsgemäßen Batteriemodul durch die Fluidleitung und die über die Dichtung mit der Fluidleitung verbindbare Anschlusseinheit gegeben sind. Die Komponenten einer Dichtung werden mechanisch über eine Spanneinrichtung gegeneinander verspannt, um die Dichtung auszubilden. Um eine höhere Dichtwirkung zu erzielen, kann die Dichtung des erfindungsgemäßen Batteriemoduls wenigstens ein Axialdichtelement oder ein Radialdichtelement, beispielsweise einen Dichtring, aufweisen, das mittels der Spanneinrichtung zwischen der Fluidleitung und der über die Dichtung mit der Fluidleitung verbindbaren Anschlusseinheit eingespannt wird.

Zur Montage des erfindungsgemäßen Batteriemoduls kann zunächst die zweite Anschlusseinheit kühlkörperseitig benachbart zu dem jeweiligen plattenartig ausgebildeten Rahmenbauteil angeordnet und kommunizierend mit dem Kühlkanalsystem sowie stirnseitig mit dem Kühlkörper verbunden werden. Anschließend kann die Fluidleitung beispielsweise mit der zweiten Anschlusseinheit, insbesondere stoffschlüssig, verbunden werden. Alternativ können die zweite Anschlusseinheit und die Fluidleitung monolithisch miteinander hergestellt sein. Beispielsweise kann die zweite Anschlusseinheit einstückig mit der Fluidleitung in Form eines männlichen oder weiblichen Flansches unter Verwendung eines Gussverfahrens oder eines Fräsverfahrens hergestellt werden. Nach Anordnung der zweiten Anschlusseinheit und der Fluidleitung an dem plattenartig ausgebildeten Kühlkörper kann eine Baugruppe, die aus der wenigstens einen elektrischen Speicherzelle und einem die elektrischen Speicherzelle umfassenden Modulrahmen gebildet ist, an dem plattenartig ausgebildeten Kühlkörper angeordnet werden. Zuletzt kann die erste Anschlusseinheit, die beispielsweise als weiblicher bzw. männlicher Flansch ausgebildet sein kann, über die Dichtung mit der Fluidleitung verbunden werden, was durch ein Anziehen der Spanneinrichtung erreicht wird. Alternativ kann die Fluidleitung mit der ersten Anschlusseinheit stoffschlüssig verbunden oder monolithisch mit letzterer hergestellt sein. Beispielsweise kann die erste Anschlusseinheit einstückig mit der Fluidleitung in Form eines männlichen oder weiblichen Flansches unter Verwendung eines Gussverfahrens oder eines Fräsverfahrens hergestellt werden. Die entsprechend aus der ersten Anschlusseinheit und der Fluidleitung gebildete Einheit kann an der Baugruppe, die aus der wenigstens einen elektrischen Speicherzelle und einem die elektrischen Speicherzelle umfassenden Modulrahmen gebildet ist, angeordnet werden. Die so gebildete Baueinheit kann an dem plattenartig ausgebildeten Kühlkörper angeordnet werden. Zuletzt kann die zweite Anschlusseinheit, die beispielsweise als weiblicher bzw. männlicher Flansch ausgebildet sein kann, über die Dichtung mit der Fluidleitung verbunden werden, was durch ein Anziehen der Spanneinrichtung erreicht wird. Nachdem die Baugruppe an dem plattenartig ausgebildeten Kühlkörper angeordnet worden ist, müssen zur Ausbildung der Fluidverbindung keine Komponenten der Fluidverbindung stoffschlüssig miteinander und/oder mit dem plattenartig ausgebildeten Kühlkörper verbunden werden.

Im Gegensatz hierzu muss bei dem Batteriemodul gemäß DE 10 2011 084 660 A1 zur Ausbildung einer Fluidverbindung zwischen dem Kühlkanalsystem und dem Fluidzulauf bzw. Fluidablauf nach erfolgter Anordnung der elektrischen Speicherzellen an dem plattenartig ausgebildeten Kühlkörper stets die Fluidleitung stoffschlüssig mit dem plattenartig ausgebildeten Kühlkörper verbunden werden. Insbesondere wird hierbei ein Ende der Fluidleitung mit dem plattenartig ausgebildeten Kühlkörper verlötet. Auch die Anschlusseinheiten sind gemäß DE 10 2011 084 660 A1 mit jeweils einer Fluidleitung verlötet. Wegen der nachträglich erforderlichen Lötvorgänge ist die Fertigung des herkömmlichen Batteriemoduls deutlich aufwändiger als die Fertigung des erfindungsgemäßen Batteriemoduls. Die nachträglichen Lötvorgänge sind zudem wegen der damit verbundenen Temperaturauswirkung auf die elektrischen Speicherzellen als extrem problematisch anzusehen. Diese Problematik ist bei der Montage des erfindungsgemäßen Batteriemoduls nicht gegeben, da kein entsprechendes nachträgliches Verlöten von Fluidleitung und plattenartig ausgebildetem Kühlkörper erforderlich ist.

Bei dem erfindungsgemäßen Batteriemodul kann der plattenartig ausgebildete Kühlkörper zusammen mit der daran angeordneten zweiten Anschlusseinheit deutlich einfacher und platzsparender mit einer Baugruppe aus der wenigstens einen elektrischen Speicherzelle und dem eventuell durch das Vorsehen einer Wabenstruktur gewichtsoptimierten Modulrahmen verbunden werden, da die Baugruppe und der plattenartig ausgebildete Kühlkörper in vertikaler Z-Richtung aufeinander zugeführt und zusammengefügt werden können. Dieses lineare bzw. geradlinige Zusammenfügen erlaubt eine einfache Serienmontage. Es sind keine aufwändigen und sicherheitskritischen Zwischenschritte wie bei der Herstellung des Batteriemodul gemäß DE 10 2011 084 660 A1 erforderlich.

Erfindungsgemäß sind der Fluidzulauf und der Fluidablauf in einem oberen Bereich des Batteriemoduls angeordnet. Dadurch sind der Fluidzulauf und der Fluidablauf besser zugänglich angeordnet als bei einer herkömmlichen seitlichen Anordnung von Fluidzulauf und Fluidablauf in einem unteren Bereich eines Batteriemoduls, insbesondere seitlich neben dem plattenartig ausgebildeten Kühlkörper. Hierdurch werden die Montage und das Handling des erfindungsgemäßen Batteriemoduls gegenüber solchen herkömmlichen Batteriemodulen erleichtert. Insbesondere ist ein herkömmlich direkt auf dem plattenartig ausgebildeten Kühlkörper positionierter Dichtflansch eines Fluidzulaufs oder Fluidablaufs schlecht zugänglich. Diese schlechte Zugänglichkeit von Fluidzulauf und Fluidablauf erschwert die Montage des Batteriemoduls erheblich und ist mit dem Risiko verbunden, dass empfindliche Komponenten, insbesondere der plattenartig ausgebildete Kühlkörper, beschädigt werden. Die schlechte Zugänglichkeit von Fluidzulauf und Fluidablauf erfordert zudem die Verwendung von verliersicheren Spezialschrauben, über die Dichtflansche des Fluidzulaufs und des Fluidablaufs mit Flanschen eines Kühlmediumkreislaufs kraftschlüssig verbindbar sind, da bei der Montage eventuell verlorene Gegenstände, beispielsweise lose Schrauben, Muttern oder dergleichen, in einem Hochvoltspeicher meist eine Komplettzerlegung des Hochvoltspeichers erfordern, um die verlorenen Gegenstände zu bergen und dadurch die Betriebssicherheit zu wahren.

Seitlich positionierte Dichtflansche bilden zudem eine Schwungmasse, die bei Vibrationsbelastungen die üblicherweise gegebene stoffschlüssige Verbindung zwischen dem plattenartig ausgebildeten Kühlkörper und den elektrischen Speicherzellen über die Betriebsdauer eines Hochvoltspeichers beschädigen kann. Demgegenüber hat die erfindungsgemäße Anordnung des Fluidzulaufs und des Fluidablaufs in dem oberen Bereich des Batteriemoduls den Vorteil, dass keine entsprechenden Schwungmassen ausgebildet werden. Folglich ist das erfindungsgemäße Batteriemodul robuster und damit dauerhafter ausgebildet als herkömmliche Batteriemodule mit seitlich in einem unteren Bereich angeordneten Dichtflanschen für den Fluidzulauf und den Fluidablauf.

Im Gegensatz zu herkömmlich seitlich in einem unteren Bereich des Batteriemoduls angeordneten Dichtflanschen für den Fluidzulauf und den Fluidablauf kann bei dem erfindungsgemäßen Batteriemodul, bei dem die erste Anschlusseinheit in einem oberen und damit zugänglicheren Bereich des Batteriemoduls angeordnet ist, die erste Anschlusseinheit deutlich einfacher über eine Kühlerfluidverbindung mit einem Medienkreislauf eines Kraftfahrzeugs und/oder weiteren Batteriemodulen des Hochvoltspeichers verbunden werden, insbesondere da die Montagekraft beim Aktivieren der Spanneinrichtung durch das zwischen den Anschlusseinheiten angeordnete, plattenartig ausgebildete Rahmenbauteil abgefangen werden kann. Zudem ist bei dem erfindungsgemäßen Batteriemodul ein einfacher Toleranzausgleich zwischen plattenartig ausgebildetem Rahmenbauteil, plattenartig ausgebildetem Kühlkörper und erster Anschlusseinheit gegeben.

Der Fluidzulauf und der Fluidablauf können entsprechen kühlkörperabseitig an einem gemeinsamen Rahmenbauteil oder an verschiedenen Rahmenbauteilen angeordnet sein. Es können auch zwei oder mehrere Fluidzuläufe bzw. Fluidabläufe an einem gemeinsamen Rahmenbauteil oder verschiedenen Rahmenbauteilen angeordnet sein. Hierdurch können Druckverluste eventuell reduziert werden.

Die Geometrie der zweiten Anschlusseinheit kann derart an den verfügbaren Bauraum unterhalb des plattenartig ausgebildeten Rahmenbauteils angepasst sein, dass möglichst wenig Bauraum von der zweiten Anschlusseinheit verbraucht wird. Zudem kann die zweite Anschlusseinheit eine spezielle Anschlussgeometrie aufweisen, die gewährleistet, dass der plattenartig ausgebildete Kühlkörper seitlich unter möglichst geringem Druckverlust und Bauraumbedarf in die zweite Anschlusseinheit eingefügt, insbesondere eingelötet, bzw. mit der zweiten Anschlusseinheit verbunden werden kann.

Die Dichtung zwischen der Fluidleitung und der wenigstens einen Anschlusseinheit verhindert eine Leckage des durch die Fluidverbindung strömenden Kühlmediums. Im Vergleich zu der Erfindung liegen die Dichtflächen einer herkömmlich seitlich in einem unteren Bereich des Batteriemoduls angeordneten Fluidkupplung und das Gewinde der die Fluidkupplung verspannenden Schraube geometrisch relativ nah beieinander.

Der plattenartig ausgebildete Kühlkörper kann als herkömmliche Kühlplatte oder davon abweichend ausgebildet sein. Das Kühlkanalsystem kann vollständig innerhalb des plattenartig ausgebildeten Kühlkörpers oder anderweitig an dem plattenartig ausgebildeten Kühlkörper angeordnet sein. Die Kühlplatte kann im Rahmen der Erfindung auch zum Erwärmen der wenigstens einen elektrischen Speicherzelle verwendet werden, um die elektrische Speicherzelle auf eine optimale Betriebstemperatur zu bringen.

Die Länge der Fluidleitung entspricht vorzugsweise etwa der Höhe des plattenartig ausgebildeten Rahmenbauteils, so dass eine einfache Montage der jeweiligen Anschlusseinheit über die Dichtung an der Fluidleitung möglich ist. Die Fluidleitung kann beispielsweise als dickwandiges, gerades Rohr ausgebildet sein. Das Ende der Fluidleitung, das über die Dichtung mit einer der Anschlusseinheiten verbindbar ist, kann eine weibliche oder männliche Dichtgeometrie aufweisen. Die Anschlusseinheit weist eine entsprechend komplementär ausgebildete Dichtgeometrie auf.

Bei dem erfindungsgemäßen Batteriemodul können auch beide Fluidverbindungen entsprechend ausgebildet sein, was in Anbetracht der oben genannten Vorteile bevorzugt ist.

Gemäß einer vorteilhaften Ausgestaltung ist ein Ende der Fluidleitung stoffschlüssig mit derjenigen Anschlusseinheit verbunden, mit der die Fluidleitung nicht über die Dichtung verbunden ist. Es kann somit die erste Anschlusseinheit oder die zweite Anschlusseinheit stoffschlüssig mit der Fluidleitung verbunden sein. Die stoffschlüssige Verbindung zwischen der Fluidleitung und der Anschlusseinheit kann als Lötverbindung ausgebildet sein. Eine stoffschlüssige oder monolithische Verbindung zwischen der Fluidleitung und der ersten Anschlusseinheit geht mit dem Vorteil einher, dass der plattenartig ausgebildete Kühlkörper zusammen mit der stoffschlüssig damit verbundenen zweiten Anschlusseinheit unter geringerem Raumbedarf lagerbar ist.

Nach einer alternativen vorteilhaften Ausgestaltung sind beide Anschlusseinheiten über jeweils eine Dichtung mit der Fluidleitung verbunden. Gemäß dieser Ausgestaltung weist die Fluidverbindung somit zwei entsprechende Dichtungen auf, die über ein Betätigen der Spanneinrichtung aktivierbar bzw. herstellbar sind. Das Rahmenbauteil kann hierbei an beiden Enden der Bohrung eine weibliche oder männliche Dichtgeometrie aufweisen. Das Rahmenbauteil kann an einem Ende der Bohrung eine weibliche Dichtgeometrie und am anderen Ende der Bohrung eine männliche Dichtgeometrie aufweisen. Alternativ können die Enden der Bohrung mit einer gleich ausgebildeten Dichtgeometrie versehen sein. Die Anschlusseinheiten weisen entsprechend komplementär ausgebildete Dichtgeometrien auf.

Eine weitere vorteilhafte Ausgestaltung sieht vor, dass die Fluidleitung durch eine an dem plattenartig ausgebildeten Rahmenbauteil angeordnete Bohrung geführt ist, wobei ein Außendurchmesser der Fluidleitung kleiner als ein Innendurchmesser der Bohrung ist. Das Rahmenbauteil ist vorzugsweise so ausgeführt, dass die Fluidleitung hinsichtlich Toleranzen und einem ausreichend großen, thermisch isolierenden Luftringspalt zwischen der Fluidleitung und der Bohrung durch das Rahmenbauteil hindurchgeführt werden kann. Hierzu ist die Differenz zwischen dem Innendurchmesser der Bohrung und dem Außendurchmesser der Fluidleitung entsprechend groß zu wählen. Alternativ kann in dem Luftringspalt wenigstens teilweise ein schwingungs- und vibrationsdämpfendes Medium vorhanden sein, um eine Geräuschoptimierung herbeizuführen.

Gemäß einer alternativen weiteren vorteilhaften Ausgestaltung ist die Fluidleitung durch eine Bohrung an dem plattenartig ausgebildeten Rahmenbauteil ausgebildet. Dies macht die Anordnung einer separaten Fluidleitung überflüssig und geht daher mit einer Materialersparnis beim Ausbilden der Fluidverbindung und folglich mit einer leichtgewichtigeren Ausgestaltung des Batteriemoduls einher.

Nach einer weiteren vorteilhaften Ausgestaltung ist der Fluidzulauf bzw. der Fluidablauf als seitlicher Abgang an der ersten Anschlusseinheit ausgebildet, der quer zu einem mit der Fluidleitung verbindbaren Zugang der ersten Anschlusseinheit angeordnet ist. Hierdurch ist eine seitliche Zuführung bzw. Abführung des Kühlmediums möglich. Unter Inkaufnahme eines höheren Druckverlusts infolge der Umlenkung des Kühlmediums in der ersten Anschlusseinheit kann hierdurch ein wertvoller Bauraum in Z-Richtung eingespart werden.

Vorteilhafterweise sind beide Fluidverbindungen entsprechend ausgebildet, wobei sowohl die beiden ersten Anschlusseinheiten als auch die beiden zweiten Anschlusseinheiten monolithisch miteinander hergestellt sind, und wobei die ersten Anschlusseinheiten über wenigstens eine gemeinsame Spanneinrichtung gegen die zweiten Anschlusseinheiten verspannbar sind. Hierdurch sind weniger Einzelteile vorhanden, was die Montage des Batteriemoduls weitergehender vereinfacht.

Es ist des Weiteren von Vorteil, wenn das plattenartig ausgebildete Rahmenbauteil als Modulhalter ausgebildet ist, über die das Batteriemodul an einem Gehäuse des Hochvoltspeichers befestigbar ist, wobei die Befestigung des Batteriemoduls an dem Gehäuse zumindest teilweise über die Spanneinrichtung erfolgt. Die Spanneinrichtung kann als Spannschraube ausgebildet sein, die in eine Gewindebohrung an dem Gehäuse einschraubbar ist. Das Batteriemodul kann aus Gründen auftretender Gehäusetoleranzen mittels einer Dreipunktverschraubung am Gehäuse befestigt sein, wobei das Batteriemodul an einer Seite allein mittels der gemeinsamen Spannschraube und an der anderen Seite mittels zwei Spannschrauben mit dem Gehäuse verschraubt ist. Hierzu sollten auftretende Toleranzen zwischen der Unterseite der verpressten elektrischen Speicherzellen über den plattenartig ausgebildeten Kühlkörper und der zweiten Anschlusseinheit zum Rahmenbauteil entweder vernachlässigbar klein sein oder durch eine Flexibilität des plattenartig ausgebildeten Kühlkörpers aufgefangen werden. Durch die ausgestaltungsgemäße Funktionsintegration werden die beiden Anschlusseinheiten über die gemeinsame Spanneinrichtung gegeneinander verspannt und das Batteriemodul an dem Gehäuse des Hochvoltspeichers befestigt. Die gemeinsame Spanneinrichtung dient somit der Verpressung bzw. Ausbildung der Dichtungen der Fluidverbindungen.

Der erfindungsgemäße Hochvoltspeicher, insbesondere für ein elektrisch antreibbares Kraftfahrzeug, umfasst wenigstens ein Batteriemodul nach einer der vorgenannten Ausgestaltungen oder einer beliebigen Kombination derselben. Mit dem Hochvoltspeicher sind die oben mit Bezug auf das Batteriemodul genannten Vorteile entsprechend verbunden.

Weitere Einzelheiten, Merkmale und Vorteile der Erfindung ergeben sich aus der nachfolgenden Beschreibung und den Figuren. Es zeigen:
- Figur 1: eine schematische und perspektivische Detaildarstellung eines Ausführungsbeispiels für ein erfindungsgemäßes Batteriemodul;
- Figur 2: eine schematische Schnittdarstellung des in Figur 1 gezeigten Batteriemoduls;
- Figur 3: eine weitere schematische Schnittdarstellung des in Figur 1 gezeigten Batteriemoduls;
- Figur 4: eine schematische Darstellung eines Montagezustands des in Figur 1 gezeigten Batteriemoduls;
- Figur 5: eine schematische Schnittdarstellung eines Ausführungsbeispiels für einen erfindungsgemäßen Hochvoltspeicher;
- Figur 6: eine Draufsicht auf den in Figur 5 gezeigten Hochvoltspeicher; und
- Figur 7: eine schematische Schnittdarstellung eines weiteren Ausführungsbeispiels für einen erfindungsgemäßen Hochvoltspeicher.

In den Figuren sind funktional gleiche Bauteile mit denselben Bezugszeichen versehen.

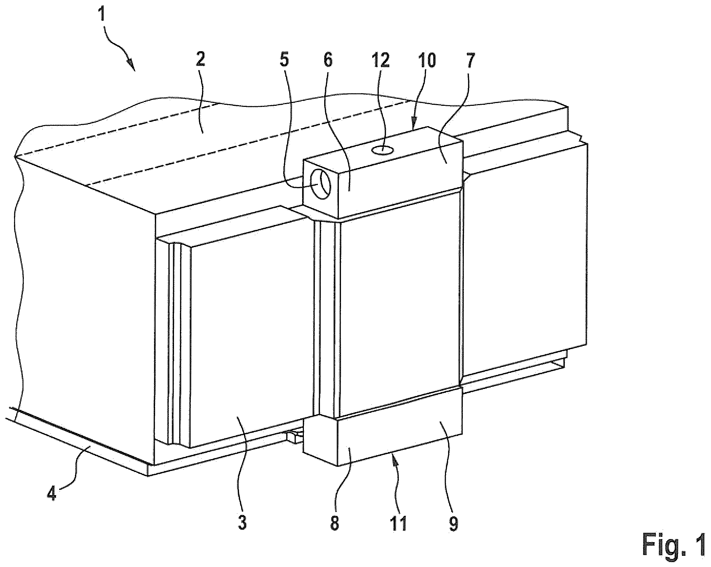

Figur 1 zeigt eine schematische und perspektivische Detaildarstellung eines Ausführungsbeispiels für ein erfindungsgemäßes Batteriemodul 1 für einen nicht weitergehender dargestellten Hochvoltspeicher eines elektrisch antreibbaren Kraftfahrzeugs.

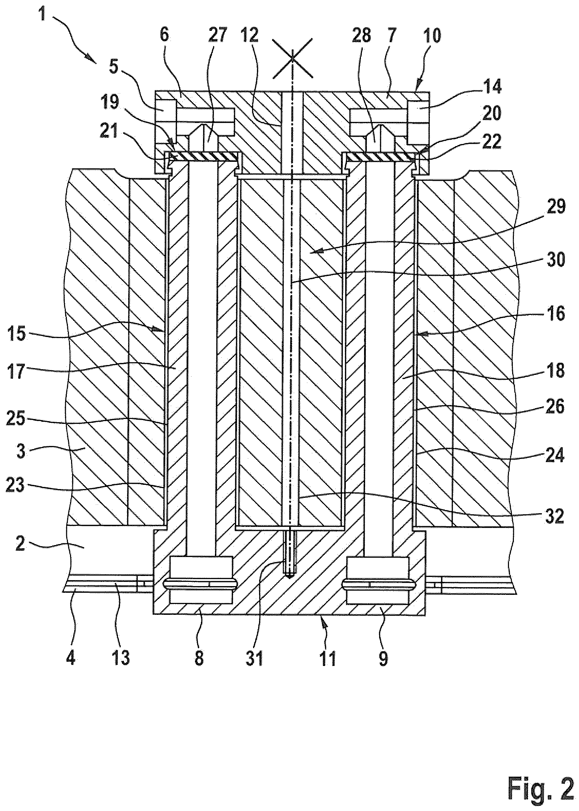

Das Batteriemodul 1 umfasst mehrere elektrische Speicherzellen 2 und zwei plattenartig ausgebildete, stirnseitig angeordnete Rahmenbauteile 3, zwischen denen die elektrische Speicherzellen 2 angeordnet sind, wobei in Figur 1 nur ein Rahmenbauteil 3 gezeigt ist. Des Weiteren umfasst das Batteriemodul 1 einen plattenartig ausgebildeten Kühlkörper 4 mit einem nicht näher dargestellten Kühlkanalsystem, der thermisch leitend mit den elektrischen Speicherzellen 2 verbunden ist. Zudem umfasst das Batteriemodul 1 einen Fluidzulauf 5, der über eine in Figur 1 nicht gezeigte erste Fluidverbindung kommunizierend mit dem Kühlkanalsystem verbundenen ist, und einen dem Fluidzulauf 5 gegenüberliegenden, nicht zu sehenden Fluidablauf, der über eine in Figur 1 nicht gezeigte zweite Fluidverbindung kommunizierend mit dem Kühlkanalsystem verbundenen ist. Der Aufbau beispielhafter Ausführungen passender Fluidverbindungen kann den Figuren 2 bis 4 entnommen werden. Der Fluidzulauf 5 und der Fluidablauf sind kühlkörperabseitig benachbart zu dem gezeigten plattenartig ausgebildeten Rahmenbauteil 3 angeordnet.

Beide Fluidverbindungen sind gleich ausgebildet und weisen jeweils eine erste Anschlusseinheit 6 bzw. 7, die kühlkörperabseitig benachbart zu dem gezeigten plattenartig ausgebildeten Rahmenbauteil 3 angeordnet ist und den Fluidzulauf 5 bzw. den Fluidablauf ausbildet, und eine kommunizierend mit der ersten Anschlusseinheit 6 bzw. 7 verbundene, in Figur 1 nicht gezeigte Fluidleitung auf. Des Weiteren umfassen die Fluidverbindungen jeweils eine zweite Anschlusseinheit 8 bzw. 9, die kühlkörperseitig benachbart zu dem gezeigten plattenartig ausgebildeten Rahmenbauteil 3 angeordnet und kommunizierend mit dem Kühlkanalsystem sowie stirnseitig mit dem Kühlkörper 4 verbunden ist. In dem in den Figur 1 gezeigten Ausführungsbeispiel sind sowohl die beiden ersten Anschlusseinheiten 6 und 7 als auch die beiden zweiten Anschlusseinheiten 8 und 9 monolithisch miteinander hergestellt. Hierdurch werden die Anschlussbauteile 10 und 11 ausgebildet. Jede Fluidverbindung umfasst eine nicht gezeigte Dichtung in Form einer Axialdichtung, über welche die jeweilige Fluidleitung mit der jeweiligen ersten Anschlusseinheit 6 bzw. 7 verbunden ist. Ein Ende der jeweiligen Fluidleitung ist stoffschlüssig mit der jeweiligen zweiten Anschlusseinheit 8 bzw. 9 verbunden. Die Fluidleitungen sind durch an dem plattenartig ausgebildeten Rahmenbauteil 3 angeordnete, nicht gezeigte Bohrungen geführt, wobei ein Außendurchmesser der jeweiligen Fluidleitung kleiner als ein Innendurchmesser der jeweiligen Bohrung ist. Der Fluidzulauf 5 und der Fluidablauf sind jeweils als seitlicher Abgang an der jeweiligen ersten Anschlusseinheit 6 bzw. 7 ausgebildet, der quer zu einem mit der jeweiligen Fluidleitung verbindbaren, nicht gezeigten Zugang der jeweiligen ersten Anschlusseinheit 6 bzw. 7 angeordnet ist.

Das Batteriemodul 1 umfasst zudem eine nicht dargestellte Spanneinrichtung, die eine Spannschraube und eine an dem Anschlussbauteil 11 angeordnete Gewindebohrung umfasst, wie es in Figur 2 gezeigt ist. An dem Anschlussbauteil 10 ist eine Bohrung 12 angeordnet, durch welche die Spannschraube geführt werden kann. Die Anschlussbauteile 10 und 11 werden über eine einzige Spanneinrichtung gegeneinander verspannt, so dass die ersten Anschlusseinheiten 6 und 7 über eine gemeinsame Spanneinrichtung gegen die zweiten Anschlusseinheiten 8 und 9 verspannbar sind.

Figur 2 zeigt eine Schnittdarstellung des in Figur 1 gezeigten Batteriemoduls 1. Es ist ein Abschnitt des Kühlkanalsystems 13 des plattenartig ausgebildeten Kühlkörpers 4 zu sehen. Des Weiteren ist der durch die erste Anschlusseinheit 7 ausgebildete Fluidablauf 14 zu sehen. Jede Fluidverbindung 15 bzw. 16 umfasst eine Fluidleitung 17 bzw. 18, die über jeweils eine Dichtung 19 bzw. 20 kommunizierend mit der jeweiligen ersten Anschlusseinheit 6 bzw. 7 verbunden sind. Jede Dichtung 19 bzw. 20 umfasst ein als Dichtring ausgebildetes Axialdichtelement 21 bzw. 22. Jede erste Anschlusseinheit 6 bzw. 7 weist eine weibliche Anschlussgeometrie und jede Fluidleitung 17 bzw. 18 weist eine männliche Anschlussgeometrie im Bereich der jeweiligen Dichtung 19 bzw. 20 auf. Ein Ende der jeweiligen Fluidleitung 17 bzw. 18 ist stoffschlüssig mit der jeweiligen zweiten Anschlusseinheit 8 bzw. 9 verbunden. Die Fluidleitungen 17 und 18 sind durch an dem plattenartig ausgebildeten Rahmenbauteil 3 angeordnete Bohrungen 23 und 24 geführt, wobei ein Außendurchmesser der jeweiligen Fluidleitung 17 bzw. 18 kleiner als ein Innendurchmesser der jeweiligen Bohrung 23 bzw. 24 ist. Hierdurch werden Luft enthaltende, thermisch isolierende Ringspalte 25 bzw. 26 zwischen den Fluidleitungen 17 und 18 und dem plattenartig ausgebildeten Rahmenbauteil 3 ausgebildet. Der Fluidzulauf 5 und der Fluidablauf 14 sind jeweils als seitlicher Abgang an der jeweiligen ersten Anschlusseinheit 6 bzw. 7 ausgebildet, der quer zu einem mit der jeweiligen Fluidleitung 17 bzw. 18 verbindbaren Zugang 27 bzw. 28 der jeweiligen ersten Anschlusseinheit 6 bzw. 7 angeordnet ist.

Die Spanneinrichtung 29 umfasst eine Spannschraube 30 und eine an dem Anschlussbauteil 11 angeordnete Gewindebohrung 31. Die Spannschraube 30 ist durch die an dem Anschlussbauteil 10 angeordnete Bohrung 12 und durch eine an dem plattenartig ausgebildeten Rahmenbauteil 3 angeordnete Bohrung 32 geführt.

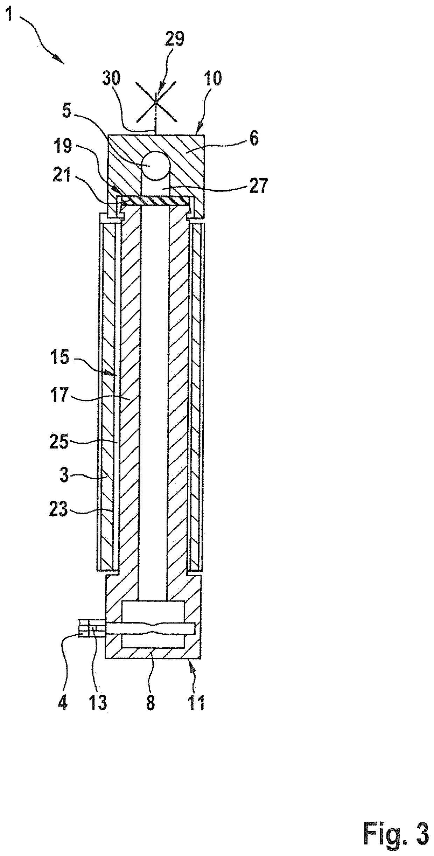

Figur 3 zeigt eine weitere Schnittdarstellung des in Figur 1 gezeigten Batteriemoduls 1 im Bereich der Fluidverbindung 15. Es ist insbesondere die Verbindung zwischen der zweiten Anschlusseinheit 8 und dem Kühlkanalsystem 13 besser ersichtlich.

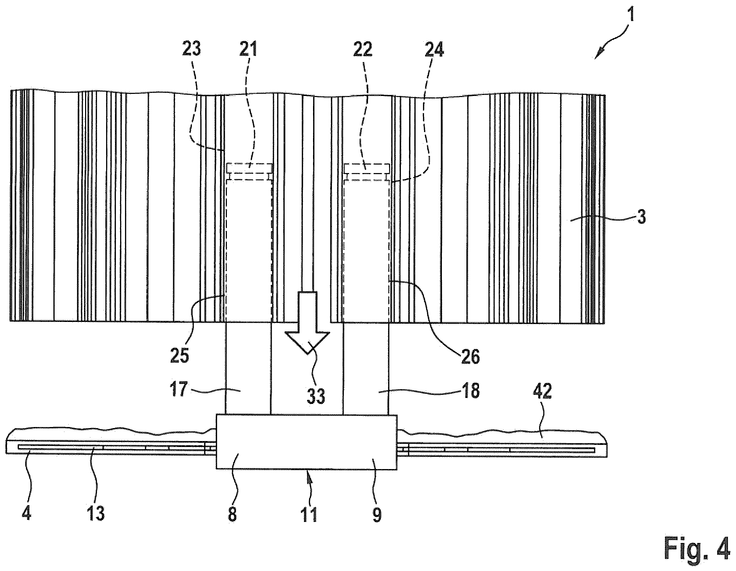

Figur 4 zeigt eine schematische Darstellung eines Montagezustands des in Figur 1 gezeigten Batteriemoduls 1. Bei der Montage des Batteriemoduls 1 kann die Baugruppe aus elektrischen Speicherzellen 2 und Modulrahmen, von dem lediglich das Rahmenbauteil 3 zu sehen ist, in einem herkömmlichen Fertigungsprozess hergestellt werden. Anschließend kann auf den gereinigten, plattenartig ausgebildeten Kühlkörper 4 mit den daran angelöteten zweiten Anschlusseinheiten 8 und 9 bzw. dem daran angelöteten Anschlussbauteil 11, an dem die Fluidleitungen 17 und 18 bereits angeordnet sind, eine einseitig selbstklebende HV-Isolationsfolie aufgebracht werden, deren Oberfläche in einem nächsten Schritt gereinigt und bei Bedarf aktiviert werden kann. Auf diese Oberfläche der HV-Isolationsfolie kann danach eine Wärmeleitvergussmasse 42 aufgetragen werden, auf der wiederum ein Klebstoff aufgetragen werden kann. Alternativ kann die Wärmeleitvergussmasse bereits eine Klebefunktion aufweisen, so dass auf einen separaten Klebstoff verzichtet werden kann. Im Nachgang kann die wie vorstehend beschriebene Baueinheit in einer Zentriervorrichtung in vertikaler Richtung an das die Baugruppe aus elektrischen Speicherzellen 2 und Modulrahmen gehoben und mit ihr verpresst werden. Alternativ oder additiv kann die Baugruppe in vertikaler Richtung auf die Baueinheit gehoben und verpresst werden, wie es in Figur 4 durch den Pfeil 33 angedeutet ist. Während dieses Fertigungsprozesses ist durch die Auslegung der Bohrungen 23 und 24 an dem plattenartig ausgebildeten Rahmenbauteil 3 hinsichtlich auftretender Toleranzen sicherzustellen, dass die Fluidleitungen 17 und 18 selbstständig und sicher ihren Weg durch das plattenartig ausgebildete Rahmenbauteil 3 finden.

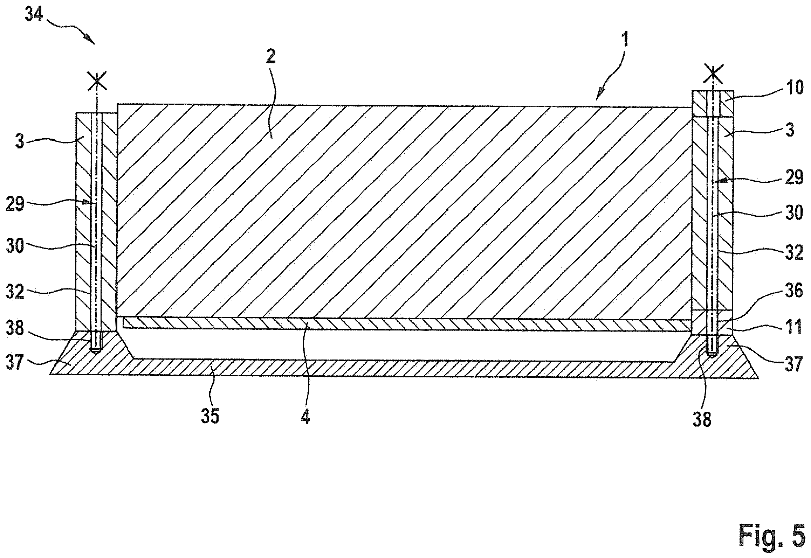

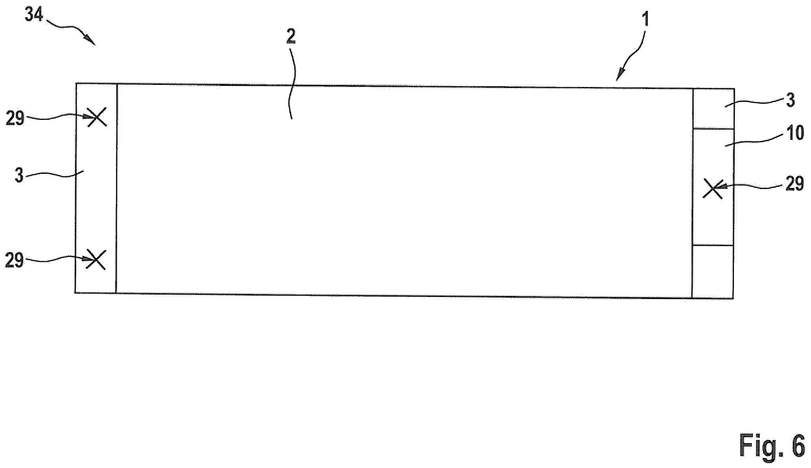

Figur 5 zeigt eine schematische Schnittdarstellung eines Ausführungsbeispiels für einen erfindungsgemäßen Hochvoltspeicher 34 für ein elektrisch antreibbares Kraftfahrzeug im Bereich eines Batteriemoduls 1. Der Hochvoltspeicher 34 umfasst mehrere Batteriemodule 1, von denen in Figur 5 nur eines gezeigt ist, und ein Gehäuse 35. Der Aufbau der Batteriemodule 1 kann im Wesentlichen dem in den Figuren 1 bis 4 gezeigten Aufbau entsprechen. Im Unterschied zu dem in den Figuren 1 bis 4 gezeigten Ausführungsbeispiel sind die plattenartig ausgebildeten Rahmenbauteile 3 als Modulhalter ausgebildet, über die das jeweilige Batteriemodul 1 an dem Gehäuse 35 des Hochvoltspeichers 34 befestigt ist. Die Befestigung des Batteriemoduls 1 an dem Gehäuse 35 erfolgt teilweise über die gemeinsame Spanneinrichtung 29. Auf der anderen Seite jedes Batteriemoduls 1 werden zwei entsprechende Spanneinrichtungen 29 zum Befestigen des Batteriemoduls an dem Gehäuse 35 eingesetzt, wie es in Figur 6 gezeigt ist. An dem Anschlussbauteil 11 jedes Batteriemoduls 1 ist statt der Gewindebohrung eine Durchgangsbohrung 36 angeordnet. An Vorsprüngen 37 des Gehäuses 35 sind Gewindebohrungen 38 angeordnet, in welche die Spannschrauben 30 eingeschraubt sind. Die Höhe des in Figur 5 rechts gezeigten plattenartig ausgebildeten Rahmenbauteils 3 ist gegenüber der Höhe des links gezeigten plattenartig ausgebildeten Rahmenbauteils 3 um die Höhe des Anschlussbauteils 11 reduziert.

Figur 6 zeigt eine Draufsicht auf den in Figur 5 gezeigten Hochvoltspeicher 34. Es ist zu sehen, dass das Batteriemodul 1 mittels der Spanneinrichtungen 29 über eine Dreipunktverschraubung an dem Gehäuse 35 befestigt ist.

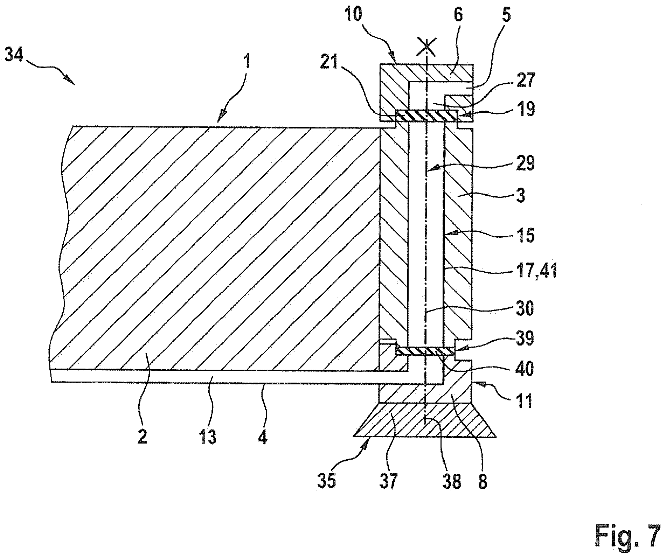

Figur 7 zeigt eine schematische Schnittdarstellung eines weiteren Ausführungsbeispiels für einen erfindungsgemäßen Hochvoltspeicher 34 im Bereich eines Batteriemoduls 1. Auch bei diesem Ausführungsbeispiel sind die plattenartig ausgebildeten Rahmenbauteile 3 als Modulhalter entsprechend dem in den Figuren 5 und 6 gezeigten Ausführungsbeispiel ausgebildet. Ein wesentlicher Unterschied zu den in den Figuren 1 bis 6 gezeigten Ausführungsbeispielen besteht darin, dass beide Anschlusseinheiten 6 und 8 bzw. 7 und 9 einer Fluidverbindung 15 bzw. 16 über jeweils eine Dichtung 19 bzw. 20 und 39 mit der jeweiligen Fluidleitung 17 bzw. 18 verbunden sind. Auch die Dichtungen 39 umfassen jeweils ein Axialdichtelement 40. Zudem sind die Fluidleitungen 17 und 18 durch Bohrungen 41 an dem plattenartig ausgebildeten Rahmenbauteil 3 ausgebildet. Im Übrigen kann das Batteriemodul 1 entsprechend den in den Figuren 1 bis 6 gezeigten Ausführungsbeispielen ausgebildet sein.

### Bezugszeichenliste:

- 1: Batteriemodul
- 2: Speicherzellen
- 3: Rahmenbauteil
- 4: Kühlkörper
- 5: Fluidzulauf
- 6: erste Anschlusseinheit
- 7: erste Anschlusseinheit
- 8: zweite Anschlusseinheit
- 9: zweite Anschlusseinheit
- 10: Anschlussbauteil
- 11: Anschlussbauteil
- 12: Bohrung
- 13: Kühlkanalsystem
- 14: Fluidablauf
- 15: Fluidverbindung
- 16: Fluidverbindung
- 17: Fluidleitung
- 18: Fluidleitung
- 19: Dichtung
- 20: Dichtung
- 21: Axialdichtelement
- 22: Axialdichtelement
- 23: Bohrung
- 24: Bohrung
- 25: Ringspalt
- 26: Ringspalt
- 27: Zugang
- 28: Zugang
- 29: Spanneinrichtung
- 30: Spannschraube
- 31: Gewindebohrung
- 32: Bohrung
- 33: Pfeil
- 34: Hochvoltspeicher
- 35: Gehäuse
- 36: Durchgangsbohrung
- 37: Vorsprung
- 38: Gewindebohrung
- 39: Dichtung
- 40: Axialdichtelement
- 41: Bohrung
- 42: Wärmeleitvergussmasse

## Patentansprüche

1. Batteriemodul (1) für einen Hochvoltspeicher (34), insbesondere eines elektrisch antreibbaren Kraftfahrzeugs, aufweisend
- wenigstens eine elektrische Speicherzelle (2),
- wenigstens zwei plattenartig ausgebildete, stirnseitig angeordnete Rahmenbauteile (3), zwischen denen die elektrische Speicherzelle (2) angeordnet ist,
- wenigstens einen plattenartig ausgebildeten Kühlkörper (4) mit zumindest einem Kühlkanalsystem (13), der thermisch leitend mit den elektrischen Speicherzellen (2) verbunden ist,
- wenigstens einen Fluidzulauf (5), der über zumindest eine erste Fluidverbindung (15) kommunizierend mit dem Kühlkanalsystem (13) verbundenen ist, und
- wenigstens einen Fluidablauf (14), der über zumindest eine zweite Fluidverbindung (16) kommunizierend mit dem Kühlkanalsystem (13) verbundenen ist,
- wobei der Fluidzulauf (5) und der Fluidablauf (14) kühlkörperabseitig benachbart zu jeweils einem der plattenartig ausgebildeten Rahmenbauteile (3) angeordnet sind, und
- wobei wenigstens eine der Fluidverbindungen (15, 16) zumindest eine erste Anschlusseinheit (6, 7), die kühlkörperabseitig benachbart zu dem jeweiligen plattenartig ausgebildeten Rahmenbauteil (3) angeordnet ist und den Fluidzulauf (5) oder den Fluidablauf (14) ausbildet, und zumindest eine kommunizierend mit der ersten Anschlusseinheit (6, 7) verbundene Fluidleitung (17, 18) aufweist,
**gekennzeichnet durch** wenigstens eine Spanneinrichtung (29), wobei die die erste Anschlusseinheit (6, 7) umfassende Fluidverbindung (15, 16) zumindest eine zweite Anschlusseinheit (8, 9) aufweist, die kommunizierend mit dem Kühlkanalsystem (13) verbunden ist, wobei die beiden Anschlusseinheiten (6, 7; 8, 9) mittels der Spanneinrichtung (29) gegeneinander verspannbar sind, wobei die zweite Anschlusseinheit (8, 9) kühlkörperseitig benachbart zu dem jeweiligen plattenartig ausgebildeten Rahmenbauteil (3) angeordnet und stirnseitig mit dem plattenartig ausgebildeten Kühlkörper (4) verbunden ist, und wobei die Fluidleitung (17, 18) über wenigstens eine Dichtung (19, 20, 39) mit wenigstens einer der beiden Anschlusseinheiten (6, 7; 8, 9) verbunden ist.

2. Batteriemodul (1) nach Anspruch 1, **dadurch gekennzeichnet, dass** ein Ende der Fluidleitung (17, 18) stoffschlüssig mit derjenigen Anschlusseinheit (6, 7; 8, 9) verbunden ist, mit der die Fluidleitung (17, 18) nicht über die Dichtung (19, 20, 39) verbunden ist.

3. Batteriemodul (1) nach Anspruch 1, **dadurch gekennzeichnet, dass** beide Anschlusseinheiten (6, 7; 8, 9) über jeweils eine Dichtung (19, 20, 39) mit der Fluidleitung (17, 18) verbunden sind.

4. Batteriemodul (1) nach einem der Ansprüche 1 bis 3, **dadurch gekennzeichnet, dass** die Fluidleitung (17, 18) durch eine an dem plattenartig ausgebildeten Rahmenbauteil (3) angeordnete Bohrung (23, 24) geführt ist, wobei ein Außendurchmesser der Fluidleitung (17, 18) kleiner als ein Innendurchmesser der Bohrung (23, 24) ist.

5. Batteriemodul (1) nach einem der Ansprüche 1 bis 3, **dadurch gekennzeichnet, dass** die Fluidleitung (17, 18) durch eine Bohrung (41) an dem plattenartig ausgebildeten Rahmenbauteil (3) ausgebildet ist.

6. Batteriemodul (1) nach einem der Ansprüche 1 bis 5, **dadurch gekennzeichnet, dass** der Fluidzulauf (5) bzw. der Fluidablauf (14) als seitlicher Abgang an der ersten Anschlusseinheit (6, 7) ausgebildet ist, der quer zu einem mit der Fluidleitung (17, 18) verbindbaren Zugang (27, 28) der ersten Anschlusseinheit (6, 7) angeordnet ist.

7. Batteriemodul (1) nach einem der Ansprüche 1 bis 6, **dadurch gekennzeichnet, dass** beide Fluidverbindungen (15, 16) entsprechend ausgebildet sind, wobei sowohl die beiden ersten Anschlusseinheiten (6, 7) als auch die beiden zweiten Anschlusseinheiten (8, 9) monolithisch miteinander hergestellt sind, und wobei die ersten Anschlusseinheiten (6, 7) über wenigstens eine gemeinsame Spanneinrichtung (29) gegen die zweiten Anschlusseinheiten (8, 9) verspannbar sind.

8. Batteriemodul (1) nach einem der Ansprüche 1 bis 7, **dadurch gekennzeichnet, dass** die plattenartig ausgebildeten Rahmenbauteile (3) als Modulhalter ausgebildet sind, über die das Batteriemodul (1) an einem Gehäuse (35) des Hochvoltspeichers (34) befestigbar ist, wobei die Befestigung des Batteriemoduls (1) an dem Gehäuse (35) zumindest teilweise über die Spanneinrichtung (29) erfolgt.

9. Hochvoltspeicher (34), insbesondere für ein elektrisch antreibbares Kraftfahrzeug, **gekennzeichnet durch** wenigstens ein Batteriemodul (1) nach einem der Ansprüche 1 bis 8.

## Claims

1. A battery module (1) for a high-voltage battery (34), especially an electrically drivable motor vehicle, having
- at least one electric storage cell (2),
- at least two plate-like frame components (3) arranged on the end faces, between which the electric storage cell (2) is arranged,
- at least one plate-like heat sink (4) with at least one cooling-duct system (13), which heat sink is connected in thermally conductive manner to the electric storage cells (2),
- at least one fluid inlet (5) which is communicatively connected to the cooling-duct system (13) via at least a first fluid connection (15), and
- at least one fluid outlet (14) which is communicatively connected to the cooling-duct system (13) via at least a second fluid connection (16),
- wherein the fluid inlet (5) and the fluid outlet (14) remotely from the heat sink are arranged adjacent to one in each case of the plate-like frame components (3), and
- wherein at least one of the fluid connections (15, 16) has at least a first connection unit (6, 7), which remotely from the heat sink is arranged adjacent to the respective plate-like frame component (3) and forms the fluid inlet (5) or the fluid outlet (14), and at least one fluid line (17, 18) which is communicatively connected to the first connection unit (6, 7),
**characterised by** at least one clamping means (29), the fluid connection (15, 16) which comprises the first connection unit (6, 7) having at least a second connection unit (8, 9) which is communicatively connected to the cooling-duct system (13), the two connection units (6, 7; 8, 9) being able to be clamped against each other by means of the clamping means (29), the second connection unit (8, 9) on the heat sink side being arranged adjacent to the respective plate-like frame component (3), and being connected on the end face to the plate-like heat sink (4), and the fluid line (17, 18) being connected via at least one seal (19, 20, 39) to at least one of the two connection units (6, 7; 8, 9).

2. A battery module (1) according to Claim 1, **characterised in that** one end of the fluid line (17, 18) is connected by a material-formed bond to that connection unit (6, 7; 8, 9) to which the fluid line (17, 18) is not connected via the seal (19, 20, 39).

3. A battery module (1) according to Claim 1, **characterised in that** both connection units (6, 7; 8, 9) are connected to the fluid line (17, 18) via one seal (19, 20, 39) in each case.

4. A battery module (1) according to one of Claims 1 to 3, **characterised in that** the fluid line (17, 18) is passed through a bore (23, 24) arranged on the plate-like frame component (3), with an external diameter of the fluid line (17, 18) being smaller than an internal diameter of the bore (23, 24).

5. A battery module (1) according to one of Claims 1 to 3, **characterised in that** the fluid line (17, 18) is formed by a bore (41) in the plate-like frame component (3).

6. A battery module (1) according to one of Claims 1 to 5, **characterised in that** the fluid inlet (5) or the fluid outlet (14) is designed as a lateral exit at the first connection unit (6, 7) which is arranged transversely to an entrance (27, 28) of the first connection unit (6, 7) which can be connected to the fluid line (17, 18).

7. A battery module (1) according to one of Claims 1 to 6, **characterised in that** both fluid connections (15, 16) are formed correspondingly, with both the first two connection units (6, 7) and the second two connection units (8, 9) being produced monolithically with each other, and with the first connection units (6, 7) being able to be clamped against the second connection units (8, 9) via at least one common clamping means (29).

8. A battery module (1) according to one of Claims 1 to 7, **characterised in that** the plate-like frame components (3) are designed as a module holder, by means of which the battery module (1) can be fastened to a housing (35) of the high-voltage battery (34), the fastening of the battery module (1) to the housing (35) taking place at least partially via the clamping means (29).

9. A high-voltage battery (34), in particular for an electrically drivable motor vehicle, **characterised by** at least one battery module (1) according to one of Claims 1 to 8.

## Revendications

1. Module de batteries (1) pour un accumulateur haute tension (34) en particulier d'un véhicule à entraînement électrique comprenant :
- au moins une cellule d'accumulation électrique (2),
- au moins deux composants de cadre (3), en forme de plaque positionnés frontalement, entre lesquels est montée la cellule d'accumulation électrique (2),
- au moins un corps de refroidissement (4) en forme de plaque ayant au moins un système de canaux de refroidissement (13) qui est relié en conduction thermique avec les cellules d'accumulation électrique (2),
- au moins une entrée de fluide (5) qui est en communication fluidique avec le système de canaux de refroidissement (13) par l'intermédiaire d'au moins une première liaison fluidique (15),
- au moins une sortie de fluide (14) qui est en communication fluidique avec le système de canaux de refroidissement (13) par l'intermédiaire d'au moins une seconde liaison fluidique (16),
- l'entrée de fluide (5) et la sortie de fluide (14) étant montées à l'écart du corps de refroidissement respectivement au voisinage de l'un des composants de cadre (3) en forme de plaque,
- au moins l'une des liaisons fluidiques (15, 16) comportant au moins une première unité de connexion (6, 7) qui est située à l'écart du corps de refroidissement au voisinage du composant de cadre (3) en forme de plaque respectif et forme l'entrée de fluide (5) ou la sortie de fluide (14), et au moins une conduite de fluide (17, 18) en communication fluidique avec la première unité de connexion (6, 7),
**caractérisé par**
au moins un dispositif de serrage (29), la liaison fluidique (15, 16) comprenant la première unité de connexion (6, 7) comprenant au moins une seconde unité de connexion (8, 9) qui est en communication fluidique avec le système de canaux de refroidissement (13), les deux unités de connexion (6, 7, 8, 9) pouvant être serrées l'une contre l'autre au moyen du dispositif de serrage (29), la seconde unité de connexion (8, 9) étant montée du côté du corps de refroidissement au voisinage du composant de cadre en forme de plaque (3) respectif, et étant reliée du côté frontal au corps de refroidissement (4) en forme de plaque, et la conduite de fluide (17, 18) étant reliée par l'intermédiaire d'au moins une étanchéité (19, 20, 39) avec au moins l'une des deux unités de connexion (6, 7, 8, 9).

2. Module de batteries (1) conforme à la revendication 1,
**caractérisé en ce que**
l'une des extrémités de la conduite de fluide (17, 18) est reliée par une liaison par la matière avec l'unité de connexion (6, 7, 8, 9) avec laquelle la conduite de fluide (17, 18) n'est pas reliée par l'intermédiaire de l'étanchéité (19, 20, 39).

3. Module de batterie (1) conforme à la revendication 1,
**caractérisé en ce que**
les deux unités de connexion (6, 7, 8, 9) sont respectivement reliées avec la conduite de fluide (17, 18) par l'intermédiaire d'une étanchéité respective (19, 20, 39).

4. Module de batteries (1) conforme à l'une des revendications 1 à 3,
**caractérisé en ce que**
la conduite de fluide (17, 18) passe au travers d'un perçage (23, 24) situé sur le composant de cadre (3) en forme de plaque, le diamètre externe de la conduite de fluide (17, 18) étant inférieur au diamètre interne du perçage (23, 24).

5. Module de batteries (1) conforme à l'une des revendications 1 à 3,
**caractérisé en ce que**
la conduite de fluide (17, 18) et formée par un perçage (41) situé sur le composant de cadre (3) en forme de plaque.

6. Module de batteries (1) conforme à l'une des revendications 1 à 5,
**caractérisé en ce que**
l'entrée de fluide (5) ou la sortie de fluide (14) est réalisée sous la forme d'un passage latéral situé sur la première unité de connexion (6, 7) qui est disposé transversalement à un accès (27, 28) pouvant être relié à la conduite de fluide (17, 18) de la première unité de connexion (6, 7).

7. Module de batteries (1) conforme à l'une des revendications 1 à 6,
**caractérisé en ce que**
les deux liaisons fluidiques (15, 16) sont formées de manière correspondantes, et les deux premières unités de connexion (6, 7) ainsi que les deux secondes unités de connexion (8, 9) sont réalisées de façon monolithiques, les premières unités de connexion (6, 7) pouvant être serrées par l'intermédiaire d'au moins un dispositif de serrage (29) commun contre les secondes unités de connexion (8, 9).

8. Module de batteries (1) conforme à l'une des revendications 1 à 7,
**caractérisé en ce que**
les composants de cadre (3) en forme de plaque sont réalisés sous la forme de portes modules permettant de fixer le module de batteries (1) peut être fixé à un boîtier (35) de l'accumulateur haute tension (34), la fixation du module de batteries (1) sur le boîtier (35) étant effectué au moins partiellement par l'intermédiaire du dispositif de serrage (29).

9. Accumulateur haute tension (34) en particulier pour un véhicule à entraînement électrique,
**caractérisé par**
au moins un module de batteries (1) conforme à l'une des revendications 1 à 8.
